**Europäisches Patentamt**

**European Patent Office**

**Office européen des brevets**

(19)

(11) Veröffentlichungsnummer: **0 197 287**

**B1**

(12)

# EUROPÄISCHE PATENTSCHRIFT

(45) Veröffentlichungstag der Patentschrift:
31.05.89

(21) Anmeldenummer: 86102685.4

(22) Anmeldetag: 01.03.86

(51) Int. Cl.⁴: **F 01 N 7/16,** F 16 J 15/34,
F 16 L 27/06

(54) **Dichtungsring.**

(30) Priorität: 10.04.85 DE 3512751

(43) Veröffentlichungstag der Anmeldung:
15.10.86 Patentblatt 86/42

(45) Bekanntmachung des Hinweises auf die Patenterteilung:
31.05.89 Patentblatt 89/22

(84) Benannte Vertragsstaaten:
DE FR GB IT SE

(56) Entgegenhaltungen:
DE-A-3 042 226
DE-A-3 229 805
FR-A-2 234 815
GB-A-2 024 656
GB-A-2 091 824
US-A-4 205 858
US-A-4 423 544

PATENTS ABSTRACTS OF JAPAN, Band 7, Nr. 20,
(M-188) 1165 , 26. Januar 1983; & JP - A - 57 173 662
(MITSUBISHI) 26-10-82
Idem

(73) Patentinhaber: GOETZE AG, Bürgermeister-
Schmidt- Strasse 17, D-5093 Burscheid 1 (DE)

(72) Erfinder: Lönne, Klaus, Dipl.- Ing., Bürgermeister-
Schmidt- Strasse 50, D-5093 Burscheid (DE)
Erfinder: Giesen, Franz- Josef, Am Alten Turm 1a,
D-5068 Odenthal 3 (DE)
Erfinder: Majewski, Klaus- Peter, Dipl.- Ing., Am
Sportfeld 26, D-5093 Burscheid (DE)
Erfinder: Voigt, Rüdiger, Wahner Delle 5, D-5093
Burscheid (DE)

EP 0 197 287 B1

## Beschreibung

Die Erfindung betrifft einen Dichtungsring mit mindestens einer als Gleitfläche dienenden Mantelfläche, wie insbesondere einen aus Gleitmaterial und bevorzugt aus metallischen Fasern verpreßten, hochtemperaturbeständigen Dichtungsring für gelenkig verbundene Auspuffleitungen von Verbrennungskraftmaschinen, wobei die Gleitflächen des Dichtungsringes gegebenenfalls mit einer Gleitbeschichtung versehen sind.

Zur Vermeidung der vom Motor ausgehenden Schwingungen ist es bekannt, die Rohrenden des Abgasauslaßrohres und des Abgassammelrohres als ineinander passende Kugel- beziehungsweise Kugelschalensegmente auszuführen und nach dem Kugelpfannensystem zu verbinden, so daß eine gewisse Winkelbeweglichkeit beziehungsweise Relativbewegung der verbundenen Rohre zueinander ausgeglichen wird. Der dazwischen geschaltete Dichtungsring ist der Kontur der Gelenkverbindung angepaßt und besitzt entsprechend eine kugelsegmentförmige Gleitfläche. Der Dichtungsring erfüllt somit die Funktion eines Gleitlagers für die mit einander verbundenen Rohrenden.

Derartige Dichtungsringe bestehen entsprechend ihrer Funktion aus Gleitwerkstoffen, und zwar werden bevorzugt aus Metallfasern und Gleitmaterialien verpreßte Dichtungsringe verwendet. Nach beispielsweise der DE-A-2 829 333 wird aus einem mit Gleitmaterial, wie Graphitfolien oder Glimmerfolien beschichteten Stahldrahtgewebe spiralig ein Ringrohling gewickelt und dann auf die gewünschte Form gepreßt. Nach der DE-C-2 845 949 wird ein Ringskelett aus langsträhnigen Stahlfasern vorgepreßt, der Rohling wird mit Gleitmaterial aus Graphitpulvern oder Glimmerpulvern durchsetzt und beschichtet und dann auf die gewünschte Endkontur gepreßt. Bei diesen Ringen können jedoch die langen Fasern die äußeren Gleitmittelschichten durchstoßen oder es können die äußeren Gleitmittelschichten abplatzen und abblättern, so daß die freiliegenden Fasern auf der Gleitfläche des Rohrendes unter Geräuschemissionen Verschleißspuren mit nachfolgenden Korrosionserscheinungen erzeugen.

Deshalb wurde nach der DE-C-3 107 920 zur Bildung des Ringskeletts Metallfaserwolle mit ungleichmäßiger Ausrichtung der Metallfasern verwendet, um die Verschleißerscheinungen zu minimieren, und die nach der DE-C-3 107 920 verwendeten Metallfasern kurzer Länge dienen außer der einfacheren Herstellbarkeit ebenfalls der Verringerung von Verschleiß- und Korrosionserscheinungen.

In der Praxis werden durch Ringe dieser Bauart Verschleiß- und Korrosionserscheinungen weitgehend vermieden, allerdings kommt es im motorischen Betrieb bei Relativbewegungen der verbundenen Auspuffrohre zueinander nachteilig trotz der hohen Gleitmittelanteile und gegebenenfalls Graphitbeschichtungen zu Geräuschemissionen in der Form von störenden Quietschgeräuschen.

Deshalb werden nach der DE-C-3 234 376 den Kurzfaser-Gleitmittelgemischen solche anorganischen oder organischen Substanzen zugemischt, die mit den Metallfasern bei erhöhter Temperatur im Gleitbereich der durch Reibbelastung erhitzten Metallfasern reagieren und die Gleitflächen der Ringe entsprechend glätten. Auf diese Weise werden zwar die Geräuschemissionen der Ringe im motorischen Betrieb herabgesetzt, allerdings könnten Geräuschemissionen, insbesondere in der Einlaufphase der Ringe wegen der sich langsam einstellenden Glättung nicht völlig unterbunden werden.

Es ist ferner bekannt, die Gleitflächen der Ringe zur Vermeidung der Geräuschemissionen mit dünnen Überzügen aus vor allem Polytetrafluorethylen zu versehen. Solche Überzüge jedoch beginnen bei der Druck-, Temperatur- und Reibbelastung an der Gleitfläche plastisch zu fließen, und werden realtiv schnell in der Einlaufphase des Motors zerstört. Eine dauernde Unterbindung der Geräuschemission an der Dichtstelle ist mit dieser Maßnahme daher nicht möglich.

Der vorliegenden Erfindung liegt daher die Aufgabe zugrunde, einen Dichtungsring gemäß Oberbegriff des Hauptpatentanspruchs zu schaffen, bei dem Geräuschemissionen im motorischen Betrieb auch nach Belastung über längere Zeit wirkungsvoll vermieden sind.

Erfindungsgemäß wird diese Aufgabe durch die kennzeichnenden Merkmale des Anspruchs 1 gelöst.

Bei Motortestläufen der erfindungsgemäß aufgerauhten Dichtungsringe wurde dabei überraschenderweise gefunden, daß diese Ringe im Gegensatz zu aus Graphit oder Glimmer und Metallfasern verpreßten und gegebenenfalls mit Graphit oder Glimmer beschichteten Ringen vor allem in der Einlaufphase keine störenden Geräuschemissionen mehr hervorrufen. Das zum optimalen Verpressen der Metallfasern erforderliche Graphitpulver oder Glimmerpulver, welche an und für sich gute Gleiteigenschaften besitzen und erwartungsgemäß eigentlich die Geräuschemissionen herabsetzen sollten, scheinen dabei in Wirklichkeit für die Geräuschemissionen verantwortlich zu sein. Durch das erfindungsgemäße Aufrauhen der Gleitflächen wird jetzt das weichere Graphit und Glimmerpulver aus dem Oberflächenbereich entfernt, und störende Geräuschemissionen werden überraschenderweise verhindert.

Ein weiter verbessertes Verhalten der Dichtungsringe wird erzielt, wenn die aufgerauhte Gleitfläche des Dichtungsringes zusätzlich mit einer Beschichtung aus hexagonalem Bornitridpulver versehen ist. Das hexagonale Bornitridpulver kann dabei in die aufgerauhte Gleitfläche so eingerieben oder eingepreßt werden, daß pro Quadratzentimeter bis zu etwa 0,03 g Bornitrid aufgetragen sind. Das Bornitrid lagert sich dabei überwiegend in den Vertiefungen der aufgerauhten Oberflächen ein und wird unter der Gleitbelastung weiter in die Vertiefungen eingerieben. Beim Abrieb der Gleitfläche, welcher bei einer lediglich aufgerauhten Gleitoberfläche bei Dauerbelastung wieder durch Graphit- und Glimmerteilchen im Oberflächenbereich zu Geräuschemissionen führen würde, bewirkt jetzt das vorhandene Bornitrid eine verbesserte Gleitreibung. Auch nach Dauerbetrieb werden so Geräuschemissionen und auch Verschleißerscheinungen durch freiliegende Metallfasern wirkungsvoll unterbunden.

Gegebenenfalls kann das Bornitrid zur verbesserten Haftung aus Dispersionen in organischen oder anorganischen Bindemitteln wie Kunstharzen auf der Basis Cumaronharzen, Silikonharzen, Epoxidharzen oder Phenolharzen oder gelösten Alkalisilikaten aufgetragen werden. Auch bei Pyrolyse der Kunstharze im motorischen Betrieb bleibt das Bornitrid in den Vertiefungen der aufgerauhten Gleitfläche haftfest vorhanden.

Dem Bornitrid kann gegebenenfalls Polytetrafluorethylenpulver zugemischt sein, und es werden gute Ergebnisse mit Mischungen aus einem Gewichtsteil Bornitrid mit bis zu 2 Gewichtsteilen Polytetrafluorethylenpulver erzielt.

Durch die Erfindung ist somit ein Dichtungsring für hochtemperaturbelastete, gelenkig verbundene Auspuffleitungen in Verbrennungskraftmaschinen geschaffen, bei dem störende Geräuschemissionen an der Gleitfläche im motorischen Betrieb wirkungsvoll unterbunden sind. Insbesondere durch die feste Bindung des Bornitrids an der aufgerauhten Gleitfläche auch nach einer Zerstörung der Bindemittelsubstanz bei Temperaturbelastung arbeitet der Ring nach Dauerbelastung geräuschemissionsfrei. Die erfindungsgemäße Beschichtung der Dichtungsringgleitflächen mit Bornitrid verhindert somit wirkungsvoll störende und quietschende Geräuschemissionen während des motorischen Betriebs über die gesamte Lebensdauer.

Die Erfindung wird durch die beiden Abbildungen näher erläutert, und zwar zeigt:

Figur 1 einen Querschnitt des erfindungsgemäßen Dichtungsringes in einer gelenkig verbundenen Auspuffleitung und

Figur 2 eine Vergrößerung des gekennzeichneten Gleitoberflächenteiles des Dichtungsringes der Figur 1

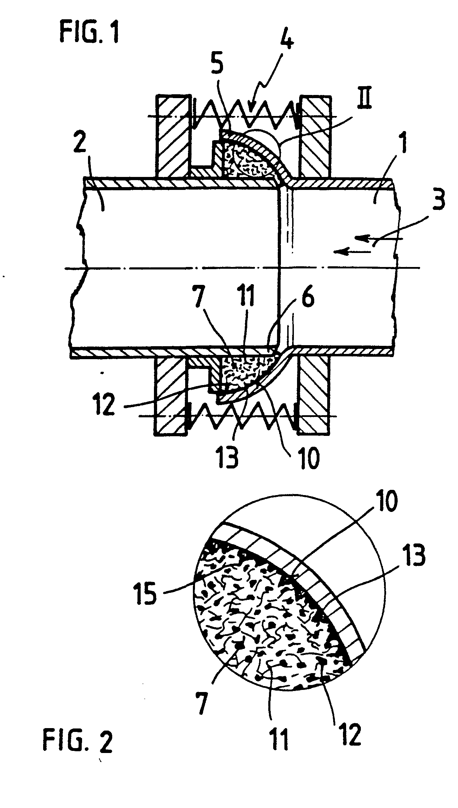

In der Figur 1 ist 1 das Abgassammelrohr und 2 das Abgasableitrohr, durch das in Strömungsrichtung 3 das Abgas strömt. An der Verbindungsstelle 4 ist das Abgassammelrohr 1 unter Bildung eines Kugelschalensegmentes 5 verformt. Das Ende 6 des Abgassammelrohres 1 ist zylindrisch. Der Dichtungsring 7 ist zwischen den beiden Rohren eingebaut, seine äußere kugelsegmentförmige Mantelfläche 10 ist mit der Beschichtung 11 aus Bornitrid und Bindemittel versehen und dient als Gleitfläche gegenüber dem verformten Ende des Abgassammelrohres 5. Im Dichtungsring 7 bilden die Edelstahlfasern 11 und die Graphitteilchen 12 einen festen Faservlies.

Die Figur 2 stellt eine starke Vergrößerung der Gleitfläche 10 des Dichtungsringes 7 dar. Die Gleitfläche 10 ist nach einem der bekannten Verfahren aufgerauht, und in die Vertiefungen 15 ist pulverförmiges Bornitrid und Bindemittel eingelagert. Die Gleitfläche 10 ist mit dem Überzug 13 aus Bornitrid und Bindemittel abgedeckt.

**Patentansprüche**

1. Hochtemperaturbeständiger Dichtungsring für gelenkig verbundene Auspuffleitungen von Verbrennungskraftmaschinen, bestehend aus miteinander verpreßtem Graphit- und/oder Glimmerpulver und bevorzugt metallischen Fasern, wobei der Dichtungsring mindestens eine als Gleitfläche dienende Mantelfläche aufweist, die gegebenenfalls beschichtet ist, dadurch gekennzeichnet, daß aus dem Gleitflächenbereich (10) des Dichtungsringes (7) durch Aufrauhen mittels eines chemischen Verfahrens, eines mechanischen Verfahrens oder durch Einprägen das Graphit- und/oder Glimmerpulver zumindest weitgehend entfernt ist.

2. Dichtungsring nach Anspruch 1, dadurch gekennzeichnet, daß auf die aufgerauhte Oberfläche (10) ein Überzug aus hexagonalem Bornitrid (13) aufgetragen, aufgepreßt und/oder eingerieben ist.

3. Dichtungsring nach den Ansprüchen 1 und 2, dadurch gekennzeichnet, daß das Bornitrid (13) in einer Menge von bis zu 0,03 g pro Quadratzentimeter Gleitfläche (10) aufgetragen ist.

4. Dichtungsring nach mindestens einem der Ansprüche 1 bis 3, dadurch gekennzeichnet, daß das Bornitrid (13) im Gemisch mit bis zu einer doppelten Menge an Polytetrafluorethylenpulver auf die Gleitfläche aufgetragen ist.

5. Dichtungsring nach mindestens einem der Ansprüche 1 bis 4, dadurch gekennzeichnet, daß gegebenenfalls das Polytetrafluorethylenpulver zusammen mit einem Bindemittel auf die Gleitflächen des Dichtungsringes nach einem der bekannten Verfahren aufgetragen ist.

**Claims**

1. High temperature-resistant seal ring for articulated exhaust pipes of internal combustion engines, consisting of graphite and/or mica powder and preferably metal fibres, which are pressed together, the seal ring comprising at least one outer wall surface which serves as a slip surface and which is likewise coated, characterised in that the graphite and/or mica powder is at least to a large extent removed from the region of the slip surface (10) of the seal ring (7) by roughening by a chemical method, by a mechanical method or by embossing.

2.Seal ring according to claim 1, characterised in that a coating of hexagonal boron nitride (13) is applied, pressed onto and/or rubbed into the roughened surface (10).

3. Seal ring according to claims 1 and 2, characterised in that the boron nitride (13) is applied in a quantity of up to 0,03 g per square centimetre slip surface (10).

4. Seal ring according to one or more of claims 1 to 3, characterised in that the boron nitride (13) is applied to the slip surface mixed with up to twice the amount of polytetrafluorethylene powder.

5. Seal ring according to one or more of claims 1 to 4, characterised in that the necessary, the polytetrafluorethylene powder is applied together with a binder to the slip surfaces of the seal ring by any of the known methods.

**Revendications**

1. Bague d'étanchéité resistant aux fortes températures pour tuyaux d'échappement de moteurs à combustion liés avec articulation, constituée d'une poudre de graphite et/ou de mica frittée ainsi qu'avantageusement de fibres métalliques, ladite bague d'étanchéité ayant au moins un revêtement servant de surface de glissement qui est le cas échéant appliqué dessus, caractérisée en ce que la poudre de graphite et/ou de mica est au moins considérablement enlevée de la zone (10) de la surface de glissement de la bague d'étanchéité (7) par un procédé chimique ou mécanique la rendant rugueuse ou encore par estampage.

2. Bague d'étanchéité selon la revendication 1, caractérisée en ce qu'un enduit en nitrure de bore hexagonal (13) est appliqué, pressé et/ou badigeonné sur la surface (10) rendue rugueuses. .

3. Bague d'étanchéité selon la revendication 1 ou la revendication 2, caractérisée en ce que le nitrure de bore (13) est appliqué dans une qualité allant jusqu'à 0,03 g par centimètre carré de surface de glissement (10).

4. Bague d'étanchéité selon au moins une des revendications 1 à 3, caractérisée en ce que le nitrure de bore (13) est appliqué sur la surface de glissement mélangé avec une quantité allant jusqu'au double de poudre de polytétrafluoréthylène.

5. Bague d'étanchéité selon au moins une des revendications 1 à 4, caractérisée en ce que le cas échéant, la poudre de polytétrafluoréthylène est appliquée sur la surface de glissement de la bague d'étanchéité avec un liant selon un des procédés connus.

EP 0 197 287 B1

FIG. 1

FIG. 2

1